# EUROPÄISCHE PATENTANMELDUNG

(11) **EP 2 077 156 A1**
(43) Veröffentlichungstag der Anmeldung: **08.07.2009**
(21) Anmeldenummer: 08010655.2
(22) Anmeldetag: 12.06.2008
(51) Int. Cl.: B01J 37/02, B01D 53/86, H01M 8/12

(54) **Katalytische Aktivbeschichtung von keramischen Wabenkörpern, Metalloberflächen und anderen Katalysatorträgern für Abluftreinigungen, Brennstoffzellen und Brenneranlagen**

(30) Priorität: 07.01.2008 DE 102008003275
(71) Anmelder: Koch, Christian, 96155 Buttenheim (DE)
(72) Erfinder: Koch, Christian, Dr., 96155 Buttenheim (DE); Koch, Ludwig-Christian, 90765 Fürth (DE)
(74) Vertreter: Kayser, Christoph

(57) **Zusammenfassung**

Es wird eine Erfindung in Form der Vorrichtung zur katalytischen Beschichtung von Oberflächen und Wabenkörpern beschrieben, die durch eine Edelmetallpulvervorbeschichtung höhere Lebensdauer, geringere Empfindlichkeit, höheren Temperatureinsatzbereich und längere Lebensdauer ermöglicht und in Form des Verfahrens für die Anwendung in flammlos katalytischen Brennwertkesseln, in der katalytischen Nachreinigung von thermischen Abluftreinigungsanlagen und als Beschichtung von Brennstoffzellenmembranen, beschrieben.

## Beschreibung

Die Patentanmeldung beschreibt als Vorrichtung eine Aktivbeschichtung und als Verfahren ein Verfahren zur Verwendung dieser Aktivbeschichtung. Es wird das Verfahren und die Vorrichtung beschrieben.

Aufgabe der Erfindung ist die Verbesserung der Abluftreinigung und der Verbrennung in 2 Stufen durch die Realisierung einer flammlos katalytischen Vergasung mit Zwischenkühlung und flammlos katalytischen Verbrennung der Vergasungsgase an katalytischen Oberflächen mit dem Ziel der Schadstoffreduzierung der Abgase und der daraus resultierenden Verbrauchsreduzierung bei gleichzeitiger Minimierung der Schadstoffproduktion an Stickoxiden und brennbaren Restgasen, wie CO und Kohlenwasserstoffen.

Der grundlegende Gedanke geht dabei davon aus, daß es möglich ist, die Eigenschaften der Abluftreinigung und der Verbrennung wesentlich zu verbessern, wenn es möglich wird, die Oxidationsreaktionen des Brennstoffes katalytisch bei tieferen Temperaturen an stabilen katalytischen Oberflächen gleichmäßig über große Temperaturbereiche und vollständig bis zu extrem geringen Restgehalten ablaufen zu lassen.

In der Patentanmeldung PA 198 00 420.6 "Kompaktanlage zur katalytischen Abluftreinigung an Brennöfen" wird eine Vorrichtung zur katalytischen Reinigung von kohlenwasserstoffhaltiger Abluft beschrieben.

Dabei werden katalytische Wabenkörper in einem Blechgehäuse durch die Vorheizung mit elektrischen Heizstäben in die Lage versetzt, durchgeleitete, kohlenwasserstoffhaltige Luft auf der Oberfläche der Wabenkörper zur Reaktion zu bringen, wodurch die Kohlenwasserstoffe zu Wasserdampf und Kohlensäure oxidieren und damit die Luft gereinigt wird.

Dabei wird ein innovativer Katalysator aus den Komponenten Kobalt, Cer und Lanthan verwendet, der durch Kristallbildung eine hohe Aktivität erreicht. Dieses ermöglicht die Verminderung des Platinanteils wesentlich und führt zu einer Reinigungswirkung im Temperaturbereich zwischen 300 und 600°C.

Es wurde nun festgestellt, daß diese Erfindung eine Reihe von Nachteilen besitzt, die durch eine neue Technik überwunden werden soll. Diese Nachteile sind der Verlust der Aktivität bereits bei geringen Übertemperaturen durch den Wash-coat, der nur maximal 600°C verträgt, die geringere Haftung der katalytischen Schicht auf der Oberfläche, die bei höheren Strömungsgeschwindigkeiten sich ablöst und die Anordnung der Vorrichtung, die es nur erlaubt, kalte Abgase einzuleiten, nicht jedoch geeignet ist, eine Nachschalteinrichtung für Brenneranlagen zu gestalten.

Brenner, die auch für thermische Abluftreinigungsanlagen eingesetzt werden, eignen sich bei verminderter Brennerleistung auch für die Nachschaltung von katalytischen Anlagen. Dabei müssen sie, die jedoch im Gegensatz zur PA 198 00 420.6 darüber hinaus die Eigenschaft besitzen, daß die katalytische Schicht wesentlich höhere Temperaturen, Strömungsgeschwindigkeiten und mechanische Widerstandskraft besitzen müssen. Das ist mit der Beschichtung, entsprechend der PA 198 00 420.6 nicht möglich.

Allein die Oberflächenvergrößerung durch die in der katalytischen Technik notwendige Oberflächenvergrößerung durch molekular feines Aluminiumoxid, dem Condea, ist eine Temperaturbegrenzung gegeben.

Diese Aluminiumoxidkomponente verliert ihre Struktur bei 600°C, wodurch sich die darüber liegende katalytische Schicht ablöst. Das Gleiche geschieht bei höheren Strömungsgeschwindigkeiten und der Beaufschlagung von mitgerissenen feinen Partikeln.

Durch diese Nachteile sind auch die katalytischen Beschichtungen der Katalysatoren aus Kobalt, Cer und Lanthan in dieser Beschichtungsform nicht geeignet. Sie haben zwar die vergleichbare katalytische Eigenschaften haben wie Platin, in der Form, wie in der Patentanmeldung 198 00 420.6 beschrieben, sie sind aber ebenso wie Platin in der Form nicht für die katalytische Nachreaktion in thermischen Abluftreinigungsanlagen geeignet.

Überraschenderweise wurde nun gefunden, daß es doch einen Weg gibt, der alle diese Nachteile beseitigt. Der Schlüssel in der Erfindung liegt in einer neuen Beschichtungstechnik und in einer daraus resultierenden neuen Verwendung dieser so neu beschichteten Katalysatoren in der Abluftreinigungs- und Brennertechnik.

Völlig überraschend eignen sich Vorbeschichtungen mit Edelmetallpulver mit einer Korngröße von weniger als 10 µm, um die nachfolgende Beschichtung des Kristalls aus Lanthan, Cer und Kobalt festen Halt, Temperaturstabilität und ausreichende Oberfläche für die katalytische Reaktion, die bei tiefen Temperaturen startet, zu geben (Bild 1). Dabei hat es sich als besonders vorteilhaft erwiesen, wenn die Metallpulvervorbeschichtung mit Zuckerlösung erfolgt.

Bisher nicht bekannt war, daß die Edelstahl- Pulver-Metalllegierungen ein idealer, abriebfester Untergrund für die katalytische Beschichtung bildet (Bild 2). Dabei wird das Anwendungsgebiet des Katalysators über die 600°C hinaus bis auf 1000°C erweitert.

Die vorher notwendigen, temperaturempfindlichen Oberflächenvergrößerer aus molekularem Aluminiumoxid (Condea) werden vollständig ersetzt und sind nicht mehr notwendig.

Auch das Ausblasen mit Druckluft (> 50m/s) verringerte die Aktivität des Katalysators nicht. Temperaturspitzen von 1100°C wurden von dem metallbeschichteten Katalysator ohne messbare Aktivitätsverluste verkraftet. (Bild 3 / Diagramm 2).
Wiederkehrende Dauerbelastungen von 550°C werden ohne Leistungsverlust von dem neuen Katalysator toleriert.

Ein völligen Verlust der Katalysatoraktivität wurde erst bei Temperaturen >1200°C beobachtet. Damit sind die so erfindungsgemäßen Beschichtungen in der Form auch für die Nachschaltung nach thermischen Abluftreinigungsanlagen geeignet. In der Form führen sie zu einer Brennstoffeinsparung durch Absenkung der Brennertemperatur von 50 - 70%.

Ein Beispiel der erfindungsgemäßen Vorrichtung ist die Beschichtung von Wabenkörper. Die Wabenkörper werden durch Erhitzen auf 200°C getrocknet. Nach dem Abkühlen werden sie in eine Suspension aus Zuckerlösung mit Edelmetallpulver mit einer Korngrößer < 10 µm getaucht,
wobei ein Wabenkörper mit der Größe von 150 mm x 150 mm x 150 mm eine Metallpulvermenge von 500 bis 1.000 g aufnimmt, d. h. je Liter Katalysatorvolumen werden 150 bis 300 g Metallpulver auf der Oberfläche der Wabenkörper und ihrer Kanäle gleichmäßig aufgenommen.

Die Wabenkörper werden danach im Ofen durch schnelles Aufheizen auf 800 bis 1000°C innerhalb von 1 - 3 Stunden mit der Suspension zu einer festen Beschichtung kalziniert. Nach Abkühlen des Wabenkörpers werden diese in ein wässriges Bad aus Lanthan-Cer-Cobaltit und Oxalsäure getaucht.

Dabei wird von dem Lanthan-Cer-Kobaltit-Kristallpulver eine Menge von 37 - 185 g/Wabenkörper, also 10 bis 50 g/Liter über die wässrige Lösung aufgetragen. Der getränkte Wabenkörper wird anschließend bei 500 - 800°C gebrannt und ist dann einsatzfertig.

Die nachfolgenden dargestellten Figuren zeigen das erfindungsgemäße Verfahren und die erfindungsgemäß0e Vorrichtung an Hand der Bilder der Beschichtung und der Wirkungen der Katalysatoren in dem Umsatz der Kohlenwasserstoffe in den Gasen zu CO2 und H20.

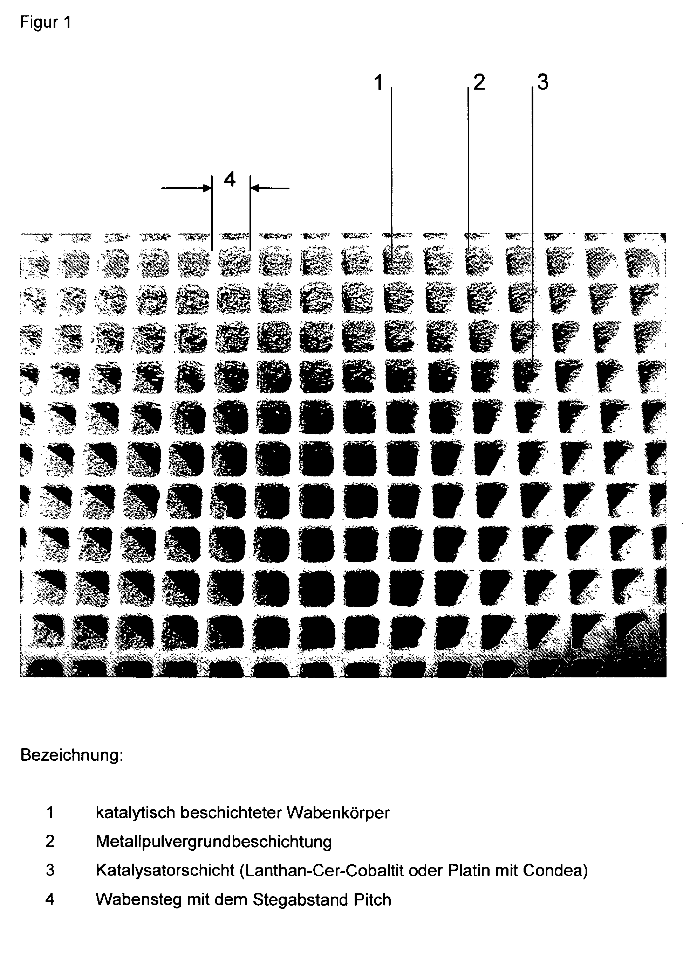

Figur 1 zeigt das Bild des zweifach beschichteten Katalysator 1. Deutlich ist die inhomogene Oberfläche der Edelstahlbeschichtung 2 zu sehen. Die zweite Beschichtung mit Lanthan-Cer-Kobaltit Kristallen 3 ist an der inhomogenen Oberfläche zu erkennen. Die Beschichtung erfolgt in einer Wabenstruktur mit einem Stegabstand 4, auch Pitch genannt.

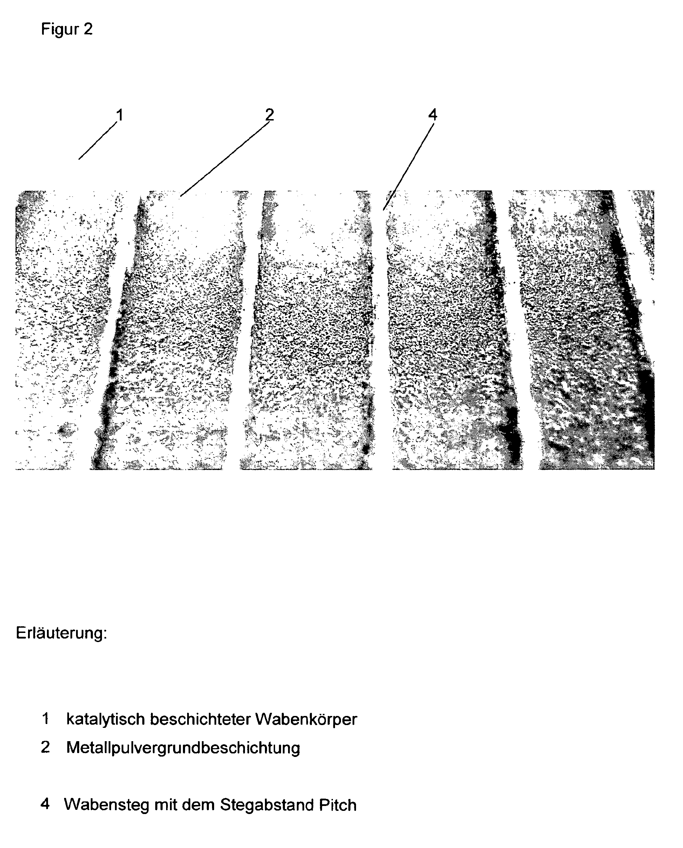

Zur näheren Erläuterung der Herstellung der Beschichtung zeigt die Figur 2 eine Vergrößerung der Oberfläche des Wabenkörpers mit den gleichen Elementen, wobei die Oberfläche nur mit dem Metallpulver beschichtet und gebrannt ist. Die Bezugszeichen sind, da es ich um den gleichen Körper handele, analog eingezeichnet. Als 2. Schritt der Beschichtung dient das Auftragen des Lanthan-Cer-Cobaltit-Pulvers in wässriger Lösung mit dem Bindemittel Oxalsäure.

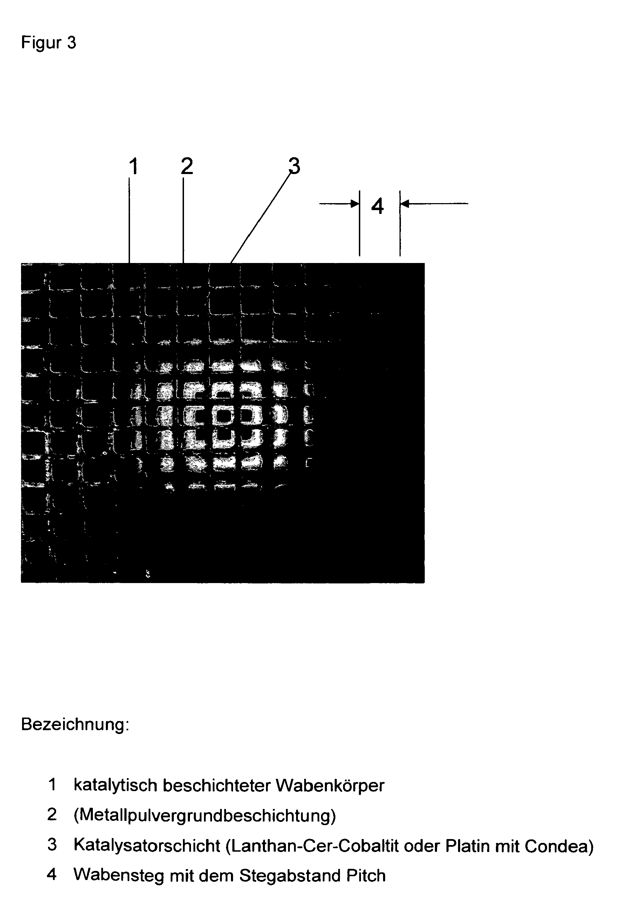

Das Ergebnis der 2. Beschichtung ist in der Figur 3 ersichtlich, welches den fertigen Katalysatorkörper in Funktion zeigt. Durch den Kohlenwasserstoffanteil in dem Gas, welches durch diesen Körper geleitet wird, entsteht in der Oxidationsreaktion eine Temperaturerhöhung ohne Flamme, die bei 900°C als Leuchten aus dem Katalysatorkörper ersichtlich ist.

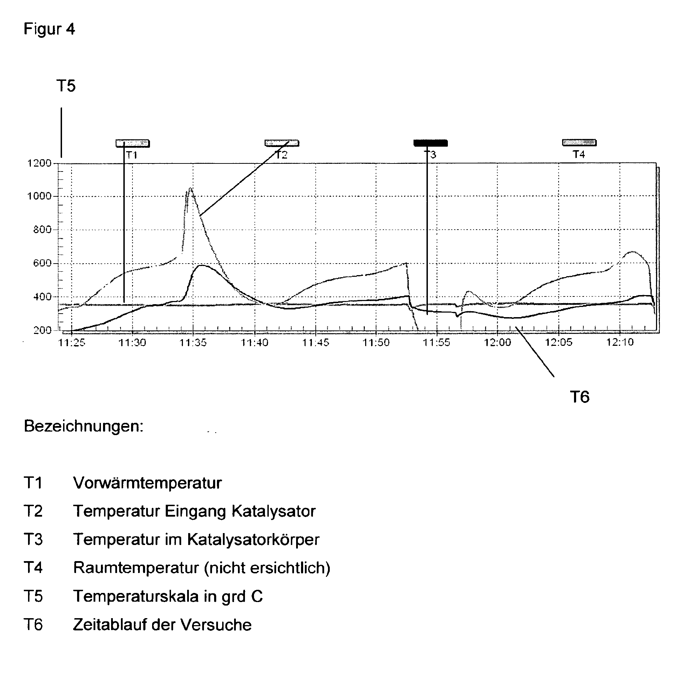

Figur 4 zeigt die Arbeitsweise der katalytischen Beschichtung. Mit T1 ist die Eingangstemperatur des Kohlenwasserstoff-Luft-Gemisches bezeichnet.

Mit T2 ist die Temperatur bezeichnet, die sich am Katalysatoreingang einstellt. Mit T3 ist die Temperatur weiter hinten in dem Wabenkörper bezeichnet. Diese ist deshalb geringer, da das Aufheizen der Keramik ein Teil der Wärmeenergie entzieht und damit die Temperatur absenkt. Mit T4 ist die Raumtemperatur bezeichnet, die unterhalb der untersten Diagrammlinie liegt. Mit T5 ist die Temperaturskala und mit T6 die Zeitskala bezeichnet.

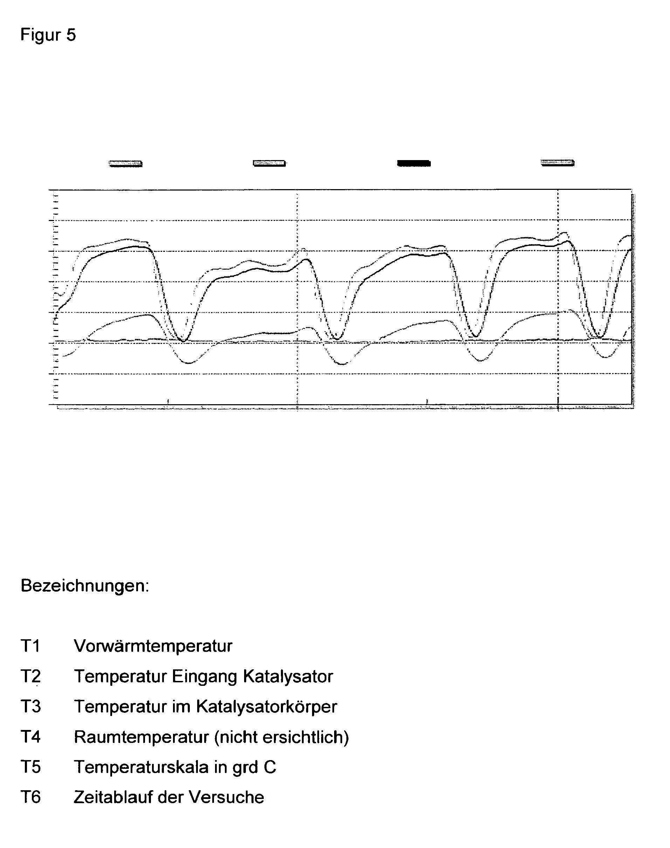

Figur 5 zeigt eine weitere Maßkurve aus einer technischen Anwendung. Auch hier sind die Bezeichnungen die gleichen wie in der Figur 4. Mit T1 ist die Eingangstemperatur, mit T2 die Temperatur am Katalysatoreingang, mit T3 die Temperatur weiter hinten in dem Katalysator und mit T4 die Temperatur am Ende der technischen Einrichtung bezeichnet. Mit T5 ist die Temperaturskala und mit T6 die Zeitskala bezeichnet.

Aus den Figuren 4 und 5 ist ersichtlich, daß die erfindungsgemäße Vorrichtung einen wesentlich erweiterten Anwendungsbereich aufweist. Temperaturschwankungen bis über 1000°C und Geschwindigkeiten des Gase an der katalytischen Oberfläche bis 5 m/s werden ohne Aktivitätsverlust vertragen und die katalytischen Beschichtung arbeitet in der gleichen Weise wie vorher.

Die Wirkung der Wärmeableitung der Metallunterbeschichtung wirkt sich extrem stabilisierend auf die katalytische Aktivität aus. Die gleichen Aktivsubstanzen, wie Platin und Lanthan-Cer-Cobaltit, vertragen ohne diese erfindungsgemäße Beschichtung keine solche Temperaturen, sondern werden schon bei 400°C niedrigeren Temperaturen mehr oder gleich angegriffen, wie bei der erfindungsgemäßen Beschichtung bei den höheren Temperaturen.

Das Verfahren wird durch die Beschreibung von 3 Einsatzfällen dieser beschichteten Wabenkörper beschrieben.

Ein Brennwertkessel besitzt in einer flammlos katalytischen Brennkammer hintereinander den Zünder, die Vergasungskatalysatorschicht in Form von Metallwaben, Keramikwaben und/oder Metallgeflechten, den Wärmetauscher 1, die Mischkammer für die Vergasungsgase und der Sekundärluft und die Verbrennungskatalysatorschicht mit nachfolgenden Wärmetauschern.

Eine Flamme wird dabei vermieden. Das Volumen des Brennwertkessels wird durch den Wegfall der Flamme verkleinert. Die erreichten Abgaswerte dieser katalytischen Verbrennung liegen nur bei einem Bruchteil der Flammenverbrennung, d. h. die Verbrennung ist extrem sauber.

Ein weiteres Ausführungsbeispiel des Verfahrens ist die katalytische Nachreinigung in thermischen Abluftreinigungsverfahren. Durch die Anordnung einer Wabenkatalysatorschicht nach dem Brenner der thermischen Abluftreinigung kann diese auf ein Bruchteil der Brennerleistung heruntergefahren werden, da die Schicht bis zu einer Durchschnittstemperatur von 350°C voll aktiv ist. Eine mittlere Temperatur von 450°C - 600° C ist dabei optimal.

Die in den thermischen Brenneranlagen nachgerüsteten katalytisch beschichteten Waben werden dabei als Segmente eingebracht und in den Ecken der Wabenkörper durch Schrauben verspannt. Die auf den runden Querschnitt zugeschnittenen Waben besitzen außen einen Metallrahmen, der durch eine Schraubenverbindung den Rahmen bündig mit dem Außenrohr verspannt. Dieser Außenrahmen überträgt die Halterung über die in den Ecken der Waben angebrachten Schrauben auf die inneren Waben.

Ein drittes Anwendungsbeispiel des Verfahrens für die Verwendung der Beschichtung ist die Anwendung auf eine Brennstoffzelle. Die auf die Brennstoffzellenmembran aufgetragene Metallpulverschicht übernimmt neben der Haftung und Oberflächenvergrößerung zusätzlich die Aufgabe der Stromableitung.

Die Lanthan-Cer-Kobaltit-Schicht ersetzt die Platinbeschichtung nicht nur vollständig, sondern ermöglicht auch eine wesentlich höhere Lebensdauer. Dieser Lebensdauerfaktor liegt, je nach Anwendungsbereich und Temperaturbereich bei 5 - 100, d. h. die Aktivität der Schicht ist um den Faktor länger erhalten.

Spezielle Anwendungsbeispiele für die Vorrichtung der Beschichtung und die Verfahren der Anwendung auf dem Gebiet der Brennertechnik, der Nachrüstung von thermischen Abluftreinigungen und der Brennstoffzelle sollen die Erfindung näher erläutern.

In einem ersten Anwendungsbeispiel hat ein Brennwertkessel mit einer Leistung von 18 kW thermischer Leistung eine Kugelverteilungsdüse, die mit Druckluft 1,5 kg Heizöl über eine mit Kerben versehene, sich drehende Kugel gleichmäßig in ein Luftvolumen von 12 m³/h, also einem Lambda von 0,5 verteilt und in einer keramischen Wabe des Bildes 1 zu einem Brenngas umsetzt. Dabei bildet sich keine Flamme, sondern die Umsetzung erfolgt entsprechend Bild 3 flammlos katalytisch an der erfindungsgemäßen Oberfläche.

Der nachfolgende Wärmetauscher wird mit Wasser durchflossen und gibt die Wärme zuerst in dem Warmwasserspeicher und die Restwärme in dem Heizkreislauf ab. Durch die Wärmeabgabe in dem Wärmetauscher kühlen sich die Vergasungsgase auf Temperaturen unterhalb von 300°C ab. Der Wärmetauscher ist wegen der CO-Korrosion aus Edelstahl.

In der nachfolgenden Mischkammer mit einer tangentialen Einblasung der am Ende des Kessels im Wärmetauscher vorgewärmten Sekundärluft und dem nachfolgenden Mischer, einem Venturimischer der Firma Sulzer, entsteht ein Vergasungsgas-Luft-Gemisch durch die sekundären 12 m³/h von Lambda nahe 1,0.

Dadurch können die Abgase über einen Dreiwegekatalysator, wie im Fahrzeug, sowohl hinsichtlich der Stickoxide als auch der Luft auf ähnlich niedrige Werte gebracht werden.

Dabei wirkt sich entscheidend positiv die schwefelresistentere Wirkungsweise des erfindungsgemäßen Katalysators gegenüber dem gebräuchlichen Autokatalysator aus. Der Katalysator bringt die Temperatur des Verbrennungsgemisches auf die optimale Temperatur von 800°C, die in den nachfolgenden Wärmetauschern in die Erwärmung des Heizkreislaufes und des Warmwassers bei Spitzenbedarf ermöglicht.

In einem zweiten Anwendungsbeispiel wird eine Nachrüstung einer thermischen Abluftreinigung durch die erfindungsgemäßen Wabenkörper beschrieben. Dazu wird die thermische Abluftreinigung von der Betriebstemperatur von 900°C auf die Betriebstemperatur von 500°C durch verminderte Zugabe des Brennstoffes, Erdgas oder Heizöl, herabgesetzt. Die runde Brennkammer erhält eine Zwischenkammer für die katalytischen Wabenkörper.

Diese besteht aus einem Wabenhaltering mit einem Ringabstand von 155 mm, die die 4 Wabenstücke, wie die 4 Viertel einer ganzen Torte eingesetzt werden. Die Wabenstücke werden aus einer porösen Wabenkeramik der Waben 150 x 150 x 150 mm mit dem Pitch von 4 mm hergestellt.

Diese werden auf die Geometrie des Viertelkreises zugeschnitten, erfindungsgemäß beschichtet und in den Ecken der Wabenkörper durch Gewindestangen mit beiderseitigen Unterlegscheiben und Muttern zueinander verschraubt. Dadurch wird die Haltekraft des Ringes am Rohr über die Verspannung der Keramikstücke zueinander bis auf den innersten Wabenkörper übertragen und dieser kann nicht aus dem Verband herausgeblasen werden, da er über den äußeren Ring und die Gewindestangen gehalten wird.

Die Wirkung der Katalysatorscheibe ist dem Bild 3 zu entnehmen. Um die Grenzwerte sicher einzuhalten, wird eine 2 Wabenschicht angeordnet. Sie ist in der Katalysatorkammer mit einem zweiten Außenring befestigt. Die Montage der beiden Schichten erfolgt in der Katalysatorkammer von den beiden Seiten des Rohres, welches anschließend an die Brennkammer angeflanscht wird. Dabei wird am Ende der Brennkammer eine Strahlungsscheibe mit Leitblechen angeordnet, um die Strahlungseinwirkung der Flamme auf den Katalysator vollständig zu verhindern und damit eine hohe Lebensdauer der Katalysatorschichten zu gewährleisten.

In einem dritten Anwendungsbeispiel wird die Verwendung der erfindungsgemäßen Verwendung der Katalysatorbeschichtung in einer Brennstoffzelle beschrieben. Hier ist die erfindungsgemäße Beschichtung von besonders hervorragender Wirkung, da sie auch die Stromableitung auf den Membranen durch die Metallpulveroberfläche extrem verbessert.

Eine Aluminiumfaser-Brennstoffzellenmembran wird mit der erfindungsgemäßen Beschichtung auf beiden Seiten versehen und in einer Brennstoffzelle für die Brennstoffe Wasserstoff, Methan, Methanol, Äthanol und dampfförmige Kohlenwasserstoffe auf der einen Seite und Luft auf der anderen Seite eingesetzt. Dabei ist das Potential der Beschichtung für die Umwandlung bzw. Vergasung der Kohlenwasserstoffe mit der erfindungsgemäßen Beschichtung ein zusätzlicher Vorteil.

Die Membran wird in der Größe 150 x 150 mm hergestellt, beschichtet und im Rahmen mit den entsprechenden gleichmäßig verteilten Gaskanälen versehen. Dabei werden die Eingänge jeweils alternativ an die Brennstoffseite und die Luftseite angeschlossen. Die Verkabelung der Brennstoffplatten erfolgt in der gleichen Weise wie bei konventionellen Brennstoffzellen.

Die Wirkung der erfindungsgemäßen Beschichtung besteht in einem deutlich verbesserten Wirkungsgrad auf Grund der verminderten elektrischen Widerstände der katalytischen Beschichtung in der Ableitung und in der wesentlich erhöhten Lebensdauer.

Die Beschichtung erfordert kein Platin auch bei den Brennstoffzellen, die ursprünglich für die Platinbeschichtung vorgesehen sind. Die Beschichtung verhält sich der Beschichtung von Platin gleichwertig mit geringerem Fortleitungswiderstand, geringerer Vergiftungsempflindlichkeit und wesentlich höherer Lebensdauer als Folge der höheren Stabilität der Kristalle der erfindungsgemäßen Beschichtung gegenüber der Platinflockenbeschichtung.

## Patentansprüche

1. Vorrichtung zur katalytischen Beschichtung von Wabenkörpern und Oberflächen, die für die Oxidationsreaktionen verwendet werden können, **dadurch gekennzeichnet, daß** diese Oberflächen mit einer Schicht von feinem Edelmetallpulver vorbeschichtet werden und anschließend mit der katalytisch aktiven Substanz nachbeschichtet werden.

2. Vorrichtung nach Anspruch 1, **dadurch gekennzeichnet, daß** die Beschichtung mit dem Edelmetallpulver mit einem Pulver der Korngröße < 10 µm mit einer Zuckerlösung erfolgt und die Körper anschließend bei 800 - 1000°C gebrannt werden.

3. Vorrichtung nach Anspruch1, **dadurch gekennzeichnet, daß** die mit Metallpulver vorbeschichtete und gebrannte Oberfläche anschließend mit einer wässrigen Lösung von Lanthan-Cer-Kobaltit-Kristallpuver und Oxalsäure nachbeschichtet wird.

4. Verfahren zur katalytischen Nachreinigung von Abgasen aus der thermischen Abluftreinigung, **dadurch gekennzeichnet, daß** eine Wabenkammer oder ein Wäbenring eingesetzt wird, der katalytische beschichtet ist.

5. Verfahren zur Anwendung der Vorrichtung oder Beschichtung, **dadurch gekennzeichnet, daß** die so hergestellten Wabenkörper aus Metallpulvervorbeschichtung und katalytischer Nachbeschichtung als Komponente nach einer thermischen Abluftreinigung eingesetzt werden.

6. Verfahren zur Anwendung der Vorrichtung oder Beschichtung, **dadurch gekennzeichnet, daß** die Katalysatoren in 2 Schichten als Vergasungsschicht mit anschließendem Wärmetauscher, Sekundäreinblasung, Verbrennungsschicht und anschließendem Wärmetauscher eingesetzt werden.

7. Verfahren zur Anwendung der Vorrichtung oder Beschichtung, **dadurch gekennzeichnet, daß** die erfinderische Schicht auf die Trennmembrane von Brennstoffzellen aufgetragen werden und dort als Wasserstoff- oder Methanolreaktionsschicht und als Sauerstoffschicht eingesetzt werden.
